# EUROPEAN PATENT SPECIFICATION

(11) **EP 0 334 460 B1**
(45) Date of publication and mention of the grant of the patent: **13.07.1994**
(21) Application number: 89200770.9
(22) Date of filing: 23.03.1989
(51) Int. Cl.: B65G 25/06, B65G 69/20

(54) **Conveying floor with a plurality of parallel moving beams for a compost plant**
Förderboden mit mehreren parallelen Förderbalken für Kompostieranlagen
Tranporteur à plancher avec des longerons parallèles à transport pour une installation de compostage

(30) Priority: 23.03.1988 NL 8800728
(43) Date of publication of application: 27.09.1989
(73) Proprietor: J.B. Rutte B.V., NL-1165 MK Halfweg (NL)
(72) Inventor: Rutte-Hoekstra, Jetske, NL-2132 TB Hoofddorp (NL)
(74) Representative: Boelsma, Gerben Harm, Ir.

(56) References cited:
- EP-A- 0 085 736
- EP-A- 0 108 148
- FR-A- 2 092 724
- FR-A- 2 110 378
- US-A- 4 071 137
- US-A- 4 798 802

## Description

The invention relates to a a load conveying floor, comprising a plurality of floor beams positioned side by side and parallel to the conveying direction, said beams being supported and mounted for a longitudinal sliding movement on mutual spaced cross beams, said floor being arranged in groups of fixedly interconnected beams that are evenly distributed across the floor width, each group of floor beams being - below floor level - associated with a drive means of the piston cylinder type which has one end connected to a fixed point of the floor construction whereas its other end engages the means that interconnects the beams of the respective group, the drive means for all of the groups being operable to either move all of the groups simultaneously from retracted end positions into forward end positions, thereby conveying the load in the conveying direction, or moving the drive means of the respective groups one after the other from said forward end positions into the individual retracted end positions and thereby keeping the load stationary.

Such a floor is known from EP 0 085 736. This well-known floor constitutes the floor of a load carrying truck. The movable floor beams are provided - on their lower side - with bushings which slide on stationary slide rods.

In accordance with the present invention a load carrying floor of the above mentioned type is provided, which is characterized in that each of said floor beams is supported on each of said cross beams with the intermediary of a roller extending with its axis parallel to said cross beams, and that the piston-cylinder devices have their cilinder ends fastened to a side face of one of said cross beams whereas the piston rod ends of said devices are directly connected to the interconnecting means of the respective groups, said cross beams constituting the floor supporting beams of a stationary building adapted for use in the conversion of organic waste material into compost, said building comprising means including air inlet and outlet openings arranged to have an air stream pass through the load of waste material on said floor.

Due to the fact that the movable floor beams are supported on said cross beams with the intermediary of rollers relative little friction is encountered when moving the floor beams and therefore relative little power is required to displace a rather heavy load of organic waste material in small steps through a stationary storage building, while air is passing through the material.

It is to be noted that it is known per se from EP 108 408 to use rollers as supporting means in a walking beam. This prior art documents, however, relates to a molten metal filling table the top of which is constituted by a plurality of reciprocatingly movable beams and a number of stationary beams provided therebetween. The movable beams are supported on the cross-member of porch-like support frames whereas the movable beams are supported on jacks on a movable frame which in turn is supported by means of rails on rollers provided in the lower part of the support frames.

Further features and advantages of the device according to the invention will be explained by way of example with reference to the accompanying drawings.
Fig. 1 shows a perspective view of the load carrying floor according to the invention;

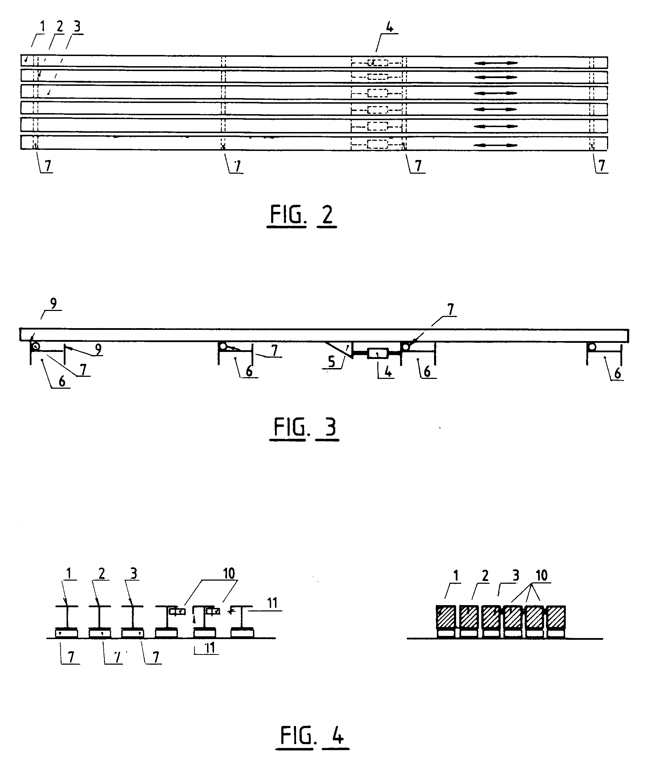

fig. 2 is a plan view,
fig. 3 is a side view,
fig. 4 shows two end views, one with section beams and one with concrete beams,
fig. 5 shows the detail of the hollow roll support,
fig. 6 shows the floor as seen at the left in fig. 4, but with rolls extending along the total floor width and having a support roll per group of beams,
fig. 6A is a side view of the floor according to figure 6,
fig. 7 shows a floor according to the invention, in which the individual beams are designed for the passage of air;
fig. 8 shows a modified form of the floor according to fig. 7;
fig. 9 shows a plan view of a load carrying floor having portions conveying in opposed directions and mutually connected by means of a conveyor belt, and
fig. 10 is a conveyor floor having adjacent oblique portions, in which the aeration is carried out during the time in which the material drops from one portion onto the other.

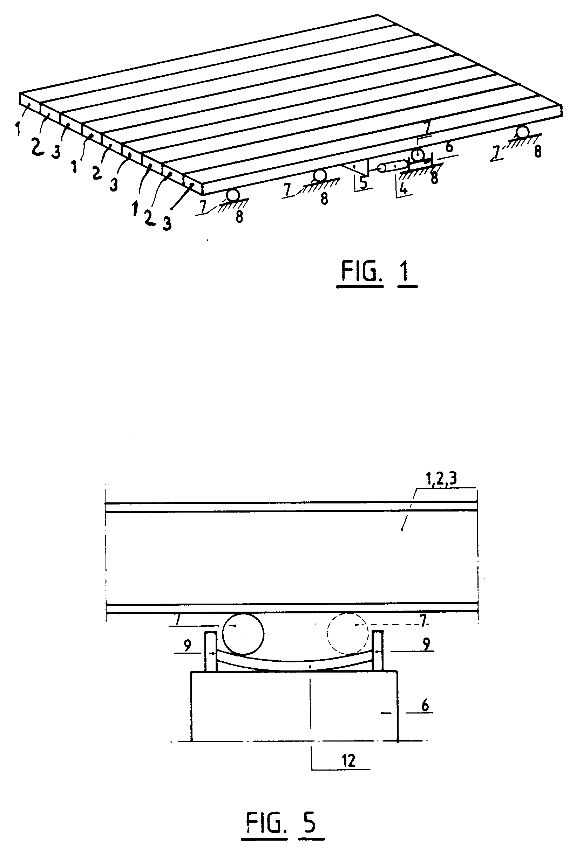

The floor shown in fig. 1 comprises longitudinally extending parallel beams of which the beams designated by 1 constitute one group, the beams 2 a second group and the beams 3 a third group. The embodiment shows three sets of each time a beam 1, 2 and 3 or three beams in group 1, three beams in group 2 and three beams in group 3. Of course the numbers may be different, and each group may also comprise a single wide beam.

With each group, i.e. the group of beams 1 and so on, one drive is associated. This comprises in the embodiment shown a piston-cylinder device 4, one end of which is connected to a fixed point 5 of one of the beams and through cross-connections to all beams of the group, whereas the other end is connected to a stationary support structure, e.g. comprising cross-beams 6 supported by the floor 8 below the conveyor floor, e.g. a concrete foundation. This last mentioned floor may be the floor of a stationary building.

Each beam, so each of the beams 1, 2, 3, is supported on the crossbeam 6 by means of a plurality of rolls 7.

The operation is as follows: when a group of beams, e.g. the beams 3, are moved in forward direction by the associated piston-cylinder device 4, a load (not shown) placed on the floor, remains in rest. The same applies if the drive of the beams 2 is thereafter actuated and also thereafter the drive of the beams 1. For the force imparted by a single group of beams through the friction on the load is not sufficient for moving the load.

Thereafter all beams are moved by their drives simultaneously in the opposite direction, whereby now the load is taken along in forward direction. By repeated operation of the drives in the above indicated manner the load may be moved from one end of the floor to the other, e.g. from the back end to the front end of a truck or building.

The stroke of the drive cylinders may be e.g. 15 cm, then the distance whereby the rolls move along the cross beams 6 is one half thereof, i.e. 7.5 cm. Also a stroke of 20 cm and more is possible. This applies to rolls which are freely supported, i.e. move on the support structure and below the conveyor floor beams. If stationary rolls would be provided in a support member on the building floor, only the conveyor floor moves.

Preferably the cross beams 6 are provided at the position of the rolls 7 with end flanges 9 so that the rolls remain enclosed by their support member.

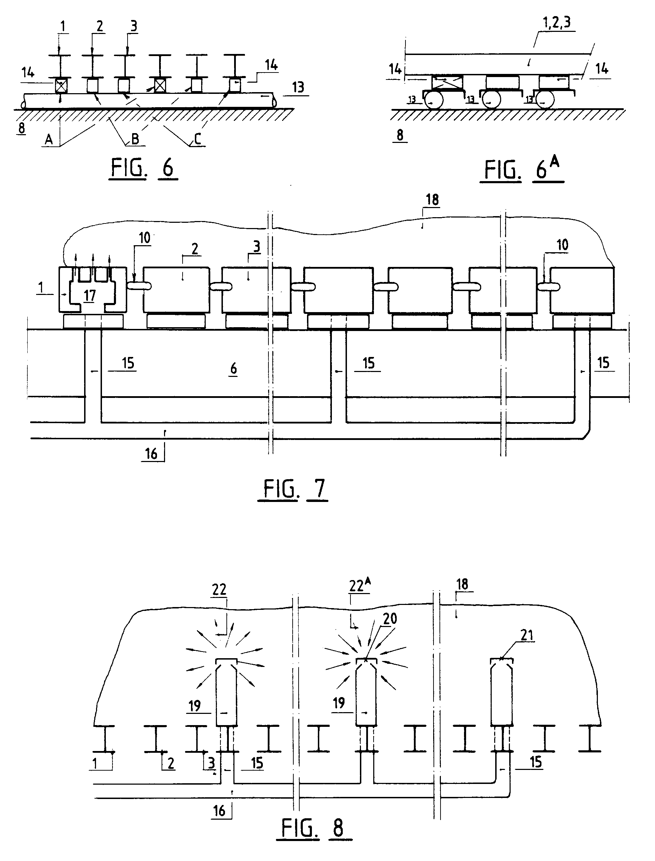

In a special embodiment the beams are provided, in addition to the support rolls 7, with side rolls 10, which are rotatable around vertical shafts (see fig. 4). As stated, if the beams are warped or warp said rolls may enter into engagement with the beams which therefore are provided with side flanges 8 along which the roll 10 may roll. Thereby the friction is further reduced. The beams are shown to the left in fig. 4 as being I-sections, to the right in fig. 4 as being solid concrete beams. In that case the rolls 10 are rotatably received in the side wall of said beams.

Fig. 5 shows the above mentioned embodiment in which a carrier member for the rolls 7, here indicated by 12, has a hollow shape extending in the direction of movement of the beams. It will be clear that also the lower side of the beam 1, 2 or 3 may have a reversed hollow shape at the position of the roll support, whereas then the support structure below the roll extends in a straight line. The purpose is in both cases to permit the beam during its movement to lower somewhat, so that its upper side releases the load. In the backward driving stroke for the beams in which the load is taken along, all beams are lowered simultaneously and thereby also the load, so that in that case the contact with the load is not lost.

Fig. 6 and 6A show another embodiment in which the rolls for each group are rolls 13, extending along the full width of the floor. Between the beams 1, 2, 3 and said rolls actuatable lifting devices 14 are provided which are only schematically shown in fig. 6. Said lifting devices may also be provided per group of beams instead of per beam. The lifting devices may be pneumatic or hydraulic piston cylinder devices, push rods or also air hoses. When the floor is driven, the lifting devices for the group of beams which are to be moved are actuated to their lowest positions, whereas the other lifting devices, belonging to the beams which then should not move, are actuated to reach their upper position.

It will be clear that the rolls, such as the rolls 7, may comprise, apart from a couple of rolls, groups of rolls combined into a so-called roller vehicle, the rolls of which may constitute railway vehicle wheels. Generally it may be said that the friction due to the rolling movement for shifting the floor will be only about 1 - 5% of the vertical floor loading. In the embodiment with the hollow carrier members according to fig. 5 or the lifting devices according to fig. 6, the friction resistance against moving the load along the beam or group of beams during mutual shifting of the beams becomes practically zero due to the release from the load.

The conveyor floor according to the invention is used as a conveyor means for waste when aerobically converting organic waste to compost.

Fig. 7 shows that some beams of, in this case, concrete beams 1, 2, 3 are hollow, said hollow beams being equally spaced along the beams and are connected per group to a main conduit 16, provided below the floor 6, by means of flexible houses. Through said conduit 6 air may be blown into the beams through pumps (not shown), said air leaving the beams through apertures 17 provided in the upper wall. Organic waste 18, to be converted to compost, is supported by the floor. The floor is provided in a completely closed building and the air leaving the material 18 is sucked off through filters (not shown) into the atmosphere. Thereby the spreading of stench is avoided.

Fig. 8 shows schematically another possibility in which air channels 19 have been provided on certain of the floor beams, said channels being likewise connected to the branch-off hoses 15 at their lower ends, said hoses being connected to the main conduit 16. The air channels 19 have a restricted nozzle at their upper sides, over which a cap 21 is provided such that the exit apertures are directed laterally while the cap prevents blocking of the nozzle by the waste. The arrows 22 indicate the exit and the arrows 22a the inflow of the air from and into the waste mass 18.

The height of the roof of the building over the beams may be about 2.5 m. This space may be filled almost completely with waste material. Thereby there is only a small unused air space, i.e. a volume of the building in which no waste is present.

Instead of blowing air through the mass from the bottom as indicated, it is also possible to suck off air through the hoses 16 and to evacuate it through filters (not shown) to the atmosphere. In that case the air enters the building through openings therein, around the waste to be converted to compost and penetrates into the waste layer. This air then reaches either the apertures 17 according to fig. 7, or the apertures 20 according to fig. 8. In a reversable system the method of passing the air as well as the other method may be used.

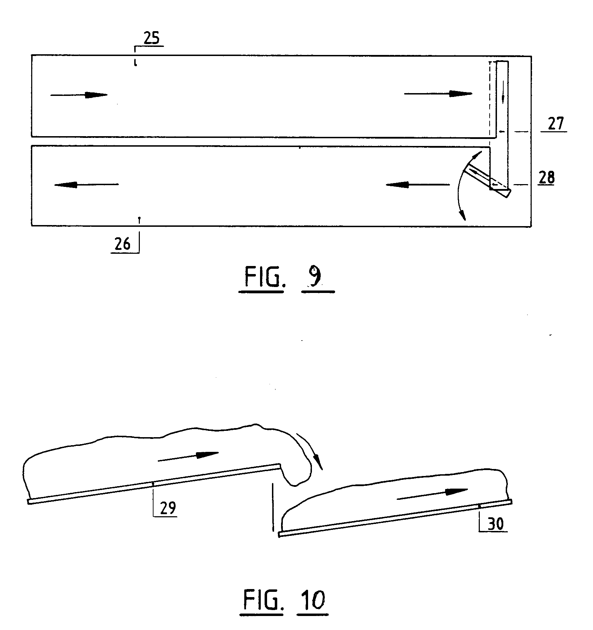

If a portion of the building floor conveys in the one direction and an adjacent floor portion in the opposed direction (see fig. 10), if necessary a number of times repeated, the supply and delivery of the material may take place at the same end of the building, which facilitates the transport.

The floor portion 25 according to fig. 10 conveys to the right, the floor portion 26 to the left. Between said portions there is provided a conveyor belt 27. A conveyor belt 28 which is moved to and fro provides for spreading the material supplied by the belt 27 over the second floor portion 26. Thereby and by the transport by the conveyor belts the material is stirred and thereby aerated.

Fig. 11 shows a floor having adjacent obliquelike portions 29 and 30 whereby the material drops from the end of portion 29 onto the initial part of portion 30 and is aerated thereby. Due to the small friction resistance to movement of the floor according to the invention, large floor loads, large cantilevered spans and large floor dimensions are permitted.

If air is sucked off or entered from or into the floor beams respectively, the joints between the floor beams should be completely sealed since otherwise so called false air is sucked through the joints, which air then does not pass the heap of waste material.

## Claims

1. A load conveying floor, comprising a plurality of floor beams (1, 2, 3) positioned side by side and parallel to the conveying direction, said beans being supported and mounted for a longitudinal sliding movement on mutual spaced cross beams (6), said floor being arranged in groups of fixedly interconnected beams that are evenly distributed across the floor width, each group of floor beams being - below floor level- associated with a drive means of the piston cylinder type which has one end connected to a fixed point of the floor construction whereas its other end engages the means that interconnects the beams of the respective group, the drive means for all of the groups being operable to either move all of the groups simultaneously from retracted end positions into forward end positions, thereby conveying the load in the conveying direction, or moving the drive means of the respective groups one after the other from said forward end positions into the individual retracted end positions and thereby keeping the load stationary, characterized in that each of said floor beams is supported on each of said cross beams with the intermediary of a roller (7) extending with its axis parallel to said cross beams, and that the piston-cylinder devices have their cylinder ends fastened to a side face (9) of one of said cross beams whereas the piston rod ends of said devices are directly connected to the interconnecting means of the respective groups, said cross beams constituting the floor supporting beams of a stationary building adapted for use in the conversion of organic waste material into compost, said building comprising means including air inlet and outlet openings arranged to have an air stream pass through the load of waste material on said floor.

2. A load conveying floor according to claim 1, characterized in that air conduits having exit apertures (17) are provided equally spaced in the beams (1, 2, 3) of the floor, said conduits being connected to a flexible hose (15), which in its turn is connected to an air supply conduit (16).

3. A floor according to claim 2, characterized in that the exit apertures (20) are provided in elevated air channels (19) provided on some of the beams (1, 2, 3) and extending longitudinally of said beams, such that the air exits into or is sucked off from the centre of the waste material (18) supported by the beams.

4. A load conveying floor according to one of the preceeding claims, characterized in that a carrier member for a roll (7) is provided on top of the cross beams (6), said carrier member having a hollow upper profile with a lowest point (12) being situated in the middle of its length.

## Patentansprüche

1. Last-fördernder Boden mit einer Vielzahl von nebeneinander und parallel zur Förderrichtung angeordneten Balken (1, 2, 3), welche in der Längsrichtung verschieblich auf im Abstand voneinander angeordneten Querbalken (6) aufliegen, welcher Boden in Gruppen von untereinander fest verbundenen, gleichmässig über die Bodenbreite verteilt liegenden Balken ausgelegt ist, wobei jede Gruppe von Bodenbalken - unter der Bodenebene - mit einem Antriebsmittel vom Kolben-Zylindertyp verbunden ist, dessen eine Ende an einem festen Punkt der Bodenanordnung angelenkt ist und dessen andere Ende mit dem die Balken der betreffenden Gruppe miteinander verbindenden Mittel verbunden ist, wobei die Antriebsmittel für sämtliche Gruppen derart steuerbar sind, dass entweder alle Gruppen zugleicherzeit aus den zurückgezogenen Endlagen in die vorderen Endlagen bewegt werden, wobei der Last in der Förderrichtung mitgenommen wird, oder die Antriebsmittel der betreffenden Gruppen nacheinander aus den genannten vorderen Lagen in die individuelle zurückgezogenen Endlagen bewegt werden, wobei der Last stillstehen bleibt, dadurch gekennzeichnet, dass jeder Bodenbalken auf jeder Querbalken mittels einer Rolle (7), deren Achse sich parallel zu den Querbalken erstreckt, aufgelegt ist und dass die Zylinderenden der Kolben-Zylindervorrichtungen an einer Seitenfläche (9) eines der Querbalken befestigt sind, während die Kolbenstangenenden jener Vorrichtungen unmittelbar mit den die Balken der betreffenden Gruppen untereinander verbindenden Mitteln verbunden sind, welche Querbalken die Stützbalken eines für die Umwandlung von Müll in Kompost eingerichteten Gebäudes bilden, bei welchem Gebäude Mittel, sowie Lufteinlassöffnungen und Luftauslassöffnungen vorgesehen sind zur Erzeugung eines Luftstromes durch die Müllmenge auf dem genannten Boden hindurch gehenden Luftstromes.

2. Last-fördernder Boden nach Anspruch 1, dadurch gekennzeichnet, dass Luftkanäle mit Austrittsöffnungen (17) regelmässig verteilt in den Baulken (1, 2, 3) des Bodens angeordnet sind, welche Kanäle an einem biegsamen Schlauch (15) angeschlossen sind, welcher mit einer Luft-Zufuhrleitung (16) verbunden ist.

3. Boden nach Anspruch 2, dadurch gekennzeichnet, dass die Anstrittsöffunngen (20) in von einigen der Baulken (1, 2, 3) aufstenenden und sich in der Längsrichtung dieser Balken erstreckenden Luftkanäle (19) vorgesehen sind, in der Weise, dass die Luft im Zentrum des auf den Balken liegenden Mülls (18) geblasen bezw. aus dem Zentrum angesaugt wird.

4. Last-fördernder Boden nach einem der vorangehenden Ansprüche, dadurch gekennzeichnet, dass auf den Querbalken (6) eine Auflage für eine Rolle (7) vorgesehen ist, welche Auflage eine konkav geformte Oberfläche aufweist, deren tiefster Punkt (12) in der Längsmitte liegt.

## Revendications

1. Plancher transporteur de charges comprenant une pluralité de poutres (1, 2, 3) de plancher positionnées côte à côte parallèlement à la direction du transport, lesdites poutres étant supportées et montées pour décrire un mouvement de coulissement longitudinal sur des poutres transversales (6) mutuellement espacées, ledit plancher étant agencé par groupes de poutres assemblées rigidement, qui sont régulièrement réparties sur la largeur du plancher, chaque groupe de poutres du plancher étant associé - au-dessous du niveau du plancher - à des moyens d'entraînement du type à vérin à piston (4), qui ont une extrémité reliée à un point fixe (5) de la construction du plancher tandis que leur autre extrémité coopère les moyens qui assemblent les poutres du groupe respectif, les moyens d'entraînement de tous les groupes pouvant être actionnés, soit pour déplacer simultanément tous les groupes de positions extrêmes rétractées à des positions extrêmes avant, en transportant ainsi la charge dans la direction du transport, soit pour déplacer les moyens d'entraînement des groupes respectifs l'un après l'autre, desdites positions extrêmes avant aux positions extrêmes rétractées individuelles et pour laisser ainsi la charge immobile, caractérisé en ce que chacune desdites poutres du plancher prend appui sur chacune desdites poutres transversales par l'intermédiaire d'un rouleau (7) qui s'étend avec son axe parallèle auxdites poutres transversales, et en ce que les dispositifs à vérin à piston ont leurs extrémités côté cylindre fixées à une face latérale (9) d'une desdites poutres transversales tandis que les extrémités côté tige de piston desdits dispositifs sont directement reliées aux moyens d'assemblage des groupes respectifs, lesdites poutres transversales constituant les poutres de support du plancher d'un bâtiment fixe adapté pour être utilisé pour la transformation de déchets organiques en compost, ledit bâtiment comprenant des moyens qui comprennent des ouvertures d'entrée d'air et de sortie d'air agencées de manière à faire circuler un courant d'air à travers la charge de déchets située sur ledit plancher.

2. Plancher transporteur de charge selon la revendication 1, caractérisé en ce qu'il est prévu des conduits d'air ayant des ouvertures de sortie (17) uniformément espacés dans les poutres (1, 2, 3) du plancher, lesdits conduits étant reliés à un tuyau souple (15), qui, à son tour, est raccordé à un conduit (16) d'arrivée d'air.

3. Plancher selon la revendication 2, caractérisé en ce que les ouvertures de sortie (20) sont prévues dans des canaux d'air surélevés (19) prévus sur certaines des poutres (1, 2, 3) et qui s'étendent selon la longueur des poutres, de sorte que l'air sort dans le centre des déchets (18) supporté par les poutres ou en est aspire.

4. Plancher transporteur de charge selon une quelconque des revendications précédentes, caractérisé en ce qu'un élément porteur destiné à porter un rouleau (7) est prévu sur la face supérieure des poutres transversales (6), ledit élément support ayant un profit supérieur creux dont le point extrême inférieur (12) est situé au milieu de sa longueur.
